# DEMANDE DE BREVET EUROPEEN

(11) **EP 2 886 378 A1**
(43) Date de publication de la demande: **24.06.2015**
(21) Numéro de dépôt: 14196697.8
(22) Date de dépôt: 08.12.2014
(51) Int. Cl.: B60H 1/00

(54) **Installation de chauffage, ventilation et/ou climatisation pour habitacle de véhicule automobile**

(30) Priorité: 17.12.2013 FR 1362763
(71) Demandeur: VALEO SYSTEMES THERMIQUES, 78320 Le Mesnil Saint-Denis (FR)
(72) Inventeur: Virey, Daniel, 78690 LES ESSARTS-LE-ROI (FR)
(74) Mandataire: Metz, Gaëlle

(57) **Abrégé**

Une installation de chauffage, ventilation et/ou climatisation pour alimenter en air à température réglée
• au moins une zone avant (1a) et
• au moins une zone arrière (1b)
de l'habitacle d'un véhicule,
est caractérisée par le fait que
• l'installation comprend deux modules (3a, 3b) distincts de traitement aéraulique disposés entre
o la zone avant (1a) et
o la zone arrière (1b).

## Description

L'invention est relative à une installation de chauffage, ventilation et/ou climatisation, pour habitacle de véhicule automobile comportant au moins une zone avant correspondant aux sièges avant et au moins une zone arrière correspondant aux sièges arrière.

Un véhicule automobile comporte un habitacle qui loge des sièges avant et des sièges arrière. Le conducteur du véhicule prend généralement place sur un premier siège avant dit « siège de conducteur ». Un passager avant peut prendre place sur un deuxième siège avant distinct du premier siège avant dit « siège de passager avant ». Les sièges arrière sont disposés derrière les sièges avant par rapport à un sens de marche avant du véhicule.

On définit de manière connue à l'intérieur d'un habitacle une pluralité de zones, telles que des zones avant et arrière et des zones haute et basse.

Les zones avant et arrière de l'habitacle sont délimitées par un plan médian orthogonal au plancher de l'habitacle. Ce plan médian est également orthogonal audit sens de marche avant du véhicule.

La zone avant loge le premier siège avant dit « siège de conducteur » et le deuxième siège avant distinct du premier siège avant dit « siège de passager avant ».

La zone arrière loge les sièges arrière du véhicule destinés à des passagers arrière.

Des zones haute et basse de l'habitacle peuvent être définies par un plan médian horizontal, parallèle au plancher de l'habitacle : la tête des passagers est située en zone haute, tandis que leurs pieds sont situés en zone basse.

Cette zone basse est communément nommée « zone de pieds » par les hommes du métier.

L'habitacle comprend aussi une zone à dégivrer telle que la zone située à proximité du pare-brise du véhicule et/ou des vitres des portières avant du véhicule : cette zone à dégivrer est principalement située en zone haute.

Les véhicules automobiles sont généralement équipés d'une installation de traitement aéraulique, assurant la ventilation, le chauffage ou la climatisation des zones internes de l'habitacle du véhicule.

Une installation de traitement aéraulique assurant la ventilation, le chauffage et/ou la climatisation comporte généralement une partie frontale d'admission d'air frais et/ou d'air habitacle, de filtration, et d'un premier traitement aéraulique de l'air admis dans l'habitacle pour assurer notamment le dégivrage du pare-brise avant, ainsi que la ventilation frontale, le chauffage et/ou la climatisation frontale de l'habitacle du véhicule.

Les paramètres de traitement aéraulique sont principalement la température du flux d'air délivré et le débit du flux d'air délivré. À cet effet, l'installation de traitement aéraulique comporte au moins un pulseur pour engendrer le flux d'air et des moyens de chauffage et/ou de climatisation pour modifier la température du flux d'air délivré.

À titre de moyen de traitement thermique de flux d'air, on connaît des radiateurs électriques et des radiateurs à fluide établissant une relation thermique entre des flux d'air et des fluides froids ou chauds circulant à travers l'habitacle du véhicule.

Le document FR 2 936 743 A1 décrit un véhicule automobile comprenant un habitacle divisé par un plan médian du véhicule en une zone avant comprenant au moins un siège avant et une zone arrière comprenant au moins un siège arrière. Ce véhicule comporte un module de ventilation, de chauffage et/ou de climatisation délimité par un boîtier muni d'au moins deux bouches d'évacuation d'air vers des zones distinctes de l'habitacle. Une première conduite d'évacuation d'air délivre un premier flux d'air à une zone basse dite « de pieds » de la zone avant du véhicule. Une deuxième conduite d'évacuation d'air délivre un deuxième flux d'air à la zone arrière du véhicule. Le module de ventilation, de chauffage et/ou de climatisation est installé sous le siège avant du véhicule.

L'état de la technique décrit dans le document FR 2 936 743 A1 donne généralement satisfaction, mais présente en pratique l'inconvénient de nécessiter des conduits auxiliaires pour ramener l'air réchauffé au niveau des pieds avant.

En outre, l'espace central du véhicule sous les sièges avant est occupé par le module de ventilation, de chauffage et/ou de climatisation, ce qui empêche l'usage de cet espace pour d'autres applications.

Un premier but de l'invention est de proposer une nouvelle installation de chauffage, ventilation et/ou climatisation pour habitacle de véhicule automobile comportant au moins une zone avant et au moins une zone arrière et contenant un dispositif de ventilation, de chauffage et/ou de climatisation.

Un deuxième but de l'invention est de libérer un espace central dans l'habitacle, de manière à permettre d'autres utilisations ou d'autres implantations d'appareils ou de dispositifs à l'intérieur de l'habitacle du véhicule.

L'invention a pour objet une installation de chauffage, ventilation et/ou climatisation pour alimenter en air à température réglée
- au moins une zone avant et
- au moins une zone arrière
de l'habitacle d'un véhicule,
caractérisée par le fait que
- l'installation comprend deux modules distincts de traitement aéraulique disposés entre
   o la zone avant et
   o la zone arrière.

Grâce à l'invention, un espace central peut être libéré dans la zone avant de l'habitacle notamment entre les deux sièges avant, ce qui permet l'implantation d'accessoires ou d'éléments à l'intérieur de l'habitacle du véhicule et ce, au centre même du véhicule.

Selon d'autres caractéristiques alternatives de l'invention :
- les modules sont disposés latéralement dans l'habitacle.
- chaque module de traitement aéraulique comporte une sortie d'air avant en direction des pieds avant et une sortie d'air arrière en direction des pieds arrière.
- chaque module de traitement aéraulique peut comporter un pulseur, un moyen de traitement thermique et au moins un moyen de répartition aéraulique entre la zone arrière et la zone avant de l'habitacle.
- chaque module peut comporter un pulseur et un moyen de traitement thermique orienté sensiblement selon l'axe longitudinal de l'habitacle.
- chaque module de traitement aéraulique peut comporter une entrée d'air orientée sensiblement selon l'axe longitudinal de l'habitacle.

Selon un premier mode de réalisation préféré, chaque module de traitement aéraulique est disposé au bas d'un montant de portière.

Cette disposition permet d'utiliser les longerons du véhicule pour conduire l'air traité et pulsé vers l'avant des pieds avant.

Selon une variante avantageuse de ce premier mode de réalisation, chaque module présente une entrée d'air orientée transversalement à l'axe longitudinal de l'habitacle, de manière à limiter l'emprise transversale du pulseur.

Selon une autre variante avantageuse du premier mode de réalisation préféré, chaque module présente un pulseur d'axe sensiblement transversal à la direction longitudinale de l'habitacle.

Cette disposition permet de présenter le pulseur selon son épaisseur dans le sens de la direction longitudinale du véhicule, en libérant l'espace central de l'habitacle.

Selon une autre variante avantageuse de l'invention, chaque module de traitement aéraulique présente un moyen de traitement thermique orienté transversalement à l'axe longitudinal du véhicule, pour présenter son épaisseur selon la direction longitudinale de l'habitacle, en libérant ainsi l'espace central de l'habitacle.

Selon d'autres modes de réalisation avantageux de l'invention, chaque module de traitement aéraulique disposé latéralement entre la zone avant et la zone arrière de l'habitacle présente une conformation en « J ».

Dans ces autres modes de réalisation, chaque module de traitement aéraulique comporte de préférence un pulseur et un moyen de traitement thermique disposés dans la partie de grande jambe de la conformation en « J ».

Selon une autre variante avantageuse des autres modes de réalisation, chaque module de traitement aéraulique présente une entrée d'air orientée sensiblement selon l'axe longitudinal de l'habitacle.

L'invention sera mieux comprise grâce à la description qui va suivre donnée à titre d'exemple non limitatif en référence aux dessins annexés dans lesquels :
La figure 1 représente schématiquement une vue de dessus d'un premier mode de réalisation d'installation de chauffage, ventilation et/ou climatisation selon l'invention, pour un habitacle dont le toit est non représenté par souci de clarté.
La figure 2 représente schématiquement une vue de dessus analogue à la figure 1 d'un deuxième mode de réalisation d'installation de chauffage, ventilation et/ou climatisation selon l'invention, pour un habitacle dont le toit est non représenté par souci de clarté.
La figure 3 représente schématiquement une vue de dessus analogue à la figure 1 d'un troisième mode de réalisation d'installation de chauffage, ventilation et/ou climatisation selon l'invention, pour un habitacle dont le toit est non représenté par souci de clarté.

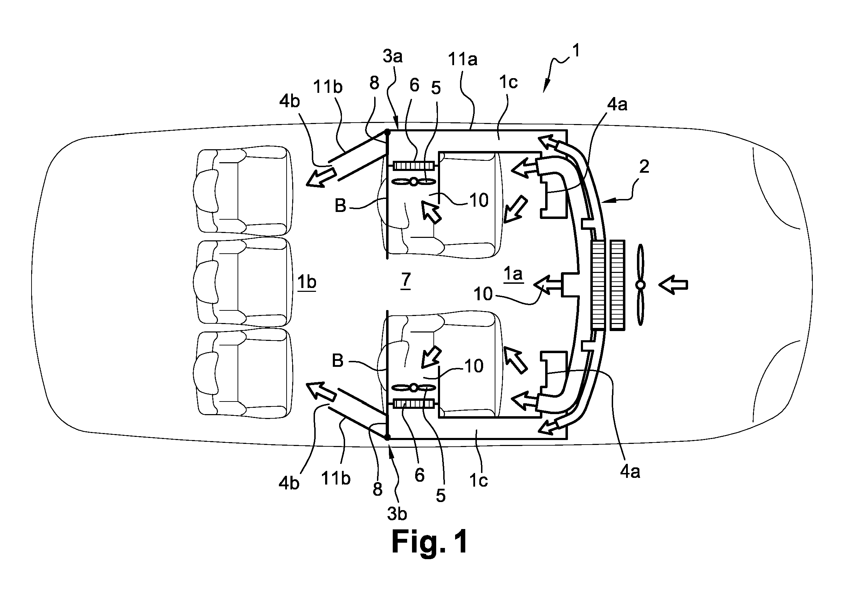

En référence aux figures 1 à 3, les éléments identiques ou fonctionnellement équivalents sont repérés par des chiffres de référence identiques.

Sur la figure 1, une installation de chauffage, ventilation et/ou climatisation selon l'invention équipe un habitacle (1) comportant une zone avant (1a) et une zone arrière (1b).

Les pieds du conducteur et du passager avant se placent dans la zone avant (1a) de l'habitacle, tandis que les pieds des passagers arrière se placent dans la zone arrière (1b) de l'habitacle.

L'habitacle (1) comporte un dispositif frontal (2) de ventilation, de chauffage et/ou de climatisation. La partie frontale (2) d'admission d'air frais permet le dégivrage du pare-brise avant, le chauffage et/ou la climatisation frontale.

Les flux d'air admis par la partie frontale (2) sont traités de manière connue par chauffage ou par refroidissement après filtration et débouchent latéralement et en partie centrale de la partie avant (1a) de l'habitacle.

Deux modules de traitement (3a, 3b) aéraulique sont avantageusement disposés en bas des montants de portière pour forcer l'air en provenance de la partie avant (1a) de l'habitacle (1) à travers des moyens additionnels de traitement disposés en bas des montants de portière.

Le fait de disposer les modules de traitement (3a, 3b) aéraulique latéralement et à proximité des montants de portière permet de libérer un espace central (7) au centre du véhicule.

L'espace central (7) libéré permet par exemple de loger des organes complémentaires, notamment des batteries en cas d'habitacle destiné à un véhicule électrique.

En outre, le fait de placer les modules (3a, 3b) de traitement aéraulique latéralement et au niveau des montants de portière permet de diminuer le niveau de bruit du système de traitement aéraulique, en autorisant un débit maximal de 160 kg/h d'air traité.

La séparation des modules thermiques (3a, 3b) de part et d'autre de la zone centrale (7) libérée évite également tout risque d'interaction thermique des deux modules de traitement (3a, 3b) aéraulique et facilite ainsi le pilotage du système de traitement aéraulique.

L'architecture de cette conception permet également d'utiliser les longerons (1c) de l'habitacle pour guider l'air traité par les modules de traitement (3a, 3b) aéraulique vers les pieds avant du conducteur et du passager avant.

Le module (3a) de traitement aéraulique comporte de préférence un boîtier B avec une sortie avant (4a) et une sortie arrière (4b), ainsi qu'un pulseur (5) et un radiateur (6).

La répartition de l'air traité est effectuée de préférence à l'aide d'au moins un volet (8) de répartition entre l'avant et l'arrière de l'habitacle intégré au boîtier B.

Cette disposition permet d'obtenir une régulation séparée pour quatre zones de pieds de passagers indépendantes et assure à chaque passager un réglage de confort indépendant.

Le réglage et la régulation du traitement aéraulique est également facilité du fait de l'indépendance des flux thermiques et du fait de l'indépendance des débits d'air en zone avant et en zone arrière.

Dans l'exemple de la figure 1, la libération de l'espace central (7) est encore améliorée du fait que les pulseurs (5) sont orientés de manière à présenter leur axe sensiblement transversalement à la direction longitudinale de l'habitacle, de sorte que l'encombrement transversal des pulseurs est égal à leur épaisseur, c'est-à-dire à leur plus petite dimension.

Cette disposition est avantageusement reproduite pour les radiateurs (6), qui sont également orientés transversalement à la direction longitudinale du véhicule, de manière à réduire leur encombrement transversal qui est égal, dans ce cas, à leur épaisseur, c'est-à-dire à leur plus petite dimension.

Le volet (8) est avantageusement disposé sensiblement au niveau du plan médian transversal de l'habitacle, de manière à accroître l'indépendance des flux avant et arrière d'air traité.

Chaque module (3a ou 3b) de traitement aéraulique comprend un boîtier B muni d'une bouche d'admission d'air 10 en communication avec l'intérieur de l'habitacle 1 de véhicule 2.

La bouche d'admission d'air 10 peut être munie d'un filtre à particules et d'un filtre à gaz polluants pour empêcher l'admission d'impuretés à l'intérieur du boîtier B.

Le boîtier B loge le pulseur 5 pour faire circuler à l'intérieur du boîtier B un flux d'air depuis la bouche d'admission d'air 10 vers une première conduite d'évacuation d'air 11a et vers une deuxième conduite d'évacuation d'air 11b.

La première conduite d'évacuation d'air 11a est reliée à un longeron 1c pour orienter le flux d'air vers la zone avant 1a de l'habitacle 1.

La deuxième conduite d'évacuation d'air 11b est reliée à une paroi du boîtier B pour orienter un flux d'air vers la zone arrière 1b de l'habitacle 1.

Le boîtier B loge également un moyen de traitement thermique 6 des flux d'air.

Un moyen de traitement 6 thermique peut comporter une pluralité de résistances chauffantes, du type PTC notamment, pour réchauffer les flux d'air.

Un autre moyen de traitement 6 thermique peut comporter une pluralité de cellules thermoélectriques, du type Peltier notamment, pour réchauffer les flux d'air.

Un autre moyen de traitement 6 thermique peut comporter un échangeur thermique entre d'une part un fluide caloporteur, eau ou glycol notamment, circulant à l'intérieur d'un circuit ménagé à l'intérieur de l'habitacle, et d'autre part le flux d'air entrant.

Un premier flux d'air est prévu pour modifier les paramètres aérothermiques de la zone avant 1a et un deuxième flux d'air prévu pour modifier les paramètres aérothermiques de la zone arrière 1b.

La deuxième conduite d'évacuation d'air 11b est disposée en aval d'un volet aussi appelé organe déflecteur 8 du deuxième flux d'air. L'organe déflecteur 8 est manoeuvrable entre des positions d'admission réglables dans laquelle ledit organe 8 admet le deuxième flux d'air vers la zone arrière 1b de l'habitacle 1, et une position de fermeture dans laquelle ledit organe 8 empêche l'admission du deuxième flux d'air vers la zone arrière 1b de l'habitacle 1.

L'invention est également applicable à une variante dans laquelle la première conduite d'évacuation d'air 11a et la deuxième conduite d'évacuation d'air 11b peuvent chacune être associées à un volet respectif de distribution d'air.

Le boîtier B peut être équipé de moyens latéraux de fixation au bas des montants de portière ou de moyens latéraux de fixation au plancher de l'habitacle 1.

Grâce à l'invention, chaque module (3a ou 3b) de traitement aéraulique permet de traiter les zones avant et arrière de manière indépendante, au moyen d'une conception simple et économique intégrée à la partie basse de l'habitacle.

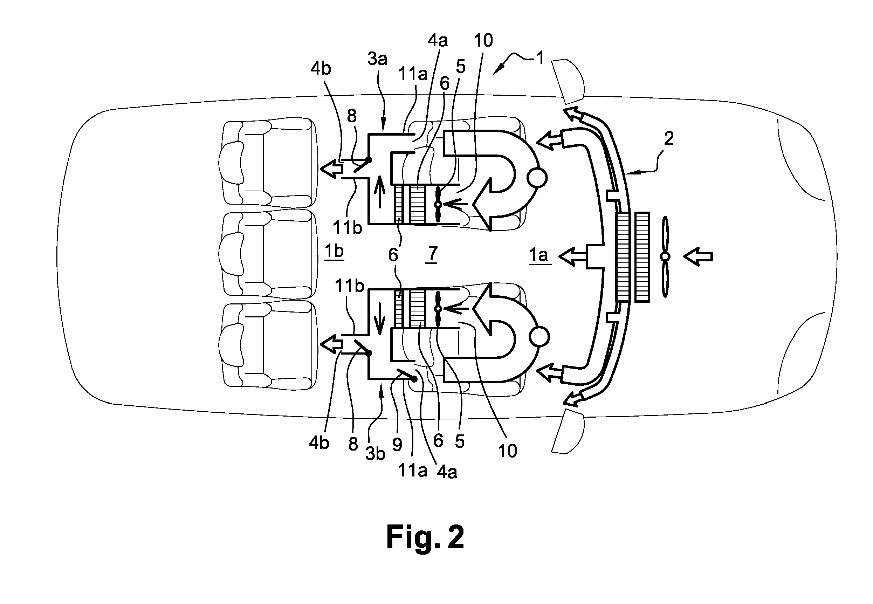

Sur la figure 2, un deuxième mode de réalisation d'une installation de chauffage, ventilation et/ou climatisation selon l'invention équipe un habitacle (1) comportant une zone avant (1a) et une zone arrière (1b), et comporte de manière connue une partie frontale (2) d'admission d'air frais et de traitement aéraulique de l'air admis dans l'habitacle (1) pour assurer le dégivrage du pare-brise avant, la ventilation frontale ainsi que le chauffage et/ou la climatisation frontale.

L'air de la partie avant est forcé dans deux modules de traitement (3a, 3b) aéraulique disposés latéralement entre la zone avant (1a) et la zone arrière (1b) de manière à libérer un espace central (7) entre les deux modules (3a ou 3b) de traitement aéraulique.

Chaque module (3a ou 3b) présente une conformation en « J », pour aspirer l'air sensiblement selon l'axe longitudinal de l'habitacle.

Dans cet exemple, la grande jambe de la conformation en « J » est située latéralement intérieurement par rapport à la petite jambe de la conformation en « J ».

L'air forcé à travers un pulseur (5) et un radiateur (6) circule dans la conformation en « J » en étant recyclé vers l'avant.

La répartition de l'air traité par les modules (3a, 3b) de traitement aéraulique s'effectue de préférence au moyen de volets arrière (8) et/ou avant (9).

Les volets (8) sont situés uniquement à l'arrière pour les modules de traitement (3a) aéraulique de conducteur.

Les volets arrière (8) et les volets avant (9) sont au contraire disposés dans chaque conduit de direction de l'air traité vers l'avant ou l'arrière de l'habitacle pour les modules de traitement (3b) aéraulique de passager.

Dans les deux cas, le traitement aéraulique de chaque zone de pied est indépendant, de sorte que chaque passager - qu'il soit ou non conducteur - peut régler de manière indépendante le traitement aéraulique qu'il désire.

La libération de l'espace central (7) permet de disposer des organes ou accessoires en partie centrale de l'habitacle.

Chaque module (3a ou 3b) de traitement aéraulique comprend un boîtier B présentant une conformation en « J ».

Chaque boîtier B présentant une conformation en « J » est muni d'une bouche d'admission d'air 10 en communication avec l'intérieur de l'habitacle 1 de véhicule 2.

La bouche d'admission d'air 10 peut être munie d'un filtre à particules et d'un filtre à gaz polluants pour empêcher l'admission d'impuretés à l'intérieur du boîtier B.

Le boîtier B loge le pulseur 5 pour faire circuler à l'intérieur du boîtier B un flux d'air depuis la bouche d'admission d'air 10 vers une première conduite d'évacuation d'air 11a et vers une deuxième conduite d'évacuation d'air 11b.

La première conduite d'évacuation d'air 11a fait partie du boîtier B pour orienter un flux d'air vers la zone avant 1a de l'habitacle 1.

La deuxième conduite d'évacuation d'air 11b est reliée à une paroi du boîtier B pour orienter un flux d'air vers la zone arrière 1b de l'habitacle 1.

Le boîtier B loge également un moyen de traitement thermique 6 des flux d'air.

Un moyen de traitement 6 thermique peut comporter une pluralité de résistances chauffantes, du type PTC notamment, pour réchauffer les flux d'air.

Un autre moyen de traitement 6 thermique peut comporter une pluralité de cellules thermoélectriques, du type Peltier notamment, pour réchauffer les flux d'air.

Un autre moyen de traitement 6 thermique peut comporter un échangeur thermique entre d'une part un fluide caloporteur, eau ou glycol notamment, circulant à l'intérieur d'un circuit ménagé à l'intérieur de l'habitacle, et d'autre part le flux d'air entrant.

Un premier flux d'air est prévu pour modifier les paramètres aérothermiques de la zone avant 1a et un deuxième flux d'air est prévu pour modifier les paramètres aérothermiques de la zone arrière 1b.

La première conduite d'évacuation d'air 11a peut être obturée en aval par un volet ou organe déflecteur 9 du premier flux d'air. L'organe déflecteur 9 est manoeuvrable entre des positions d'admission réglables dans laquelle ledit organe 9 admet le premier flux d'air vers la zone avant 1a de l'habitacle 1, et une position de fermeture dans laquelle ledit organe 9 empêche l'admission du premier flux d'air vers la zone avant 1a de l'habitacle 1.

La deuxième conduite d'évacuation d'air 11b est disposée en aval de l'organe déflecteur 8 du deuxième flux d'air. L'organe déflecteur 8 est manoeuvrable entre des positions d'admission réglables dans laquelle ledit organe 8 admet le deuxième flux d'air vers la zone arrière 1b de l'habitacle 1, et une position de fermeture dans laquelle ledit organe 8 empêche l'admission du deuxième flux d'air vers la zone arrière 1b de l'habitacle 1.

Le boîtier B peut être équipé de moyens latéraux de fixation au bas des montants de portière ou de moyens latéraux de fixation au plancher de l'habitacle 1.

Dans cet exemple, l'entrée d'air (10) de chaque module (3a, 3b) est orientée sensiblement selon l'axe longitudinal de l'habitacle, de manière à assurer un forçage de l'air de la partie avant (1a) de l'habitacle (1) sans perte de charge notable à l'entrée du pulseur (5).

Dans le mode de réalisation de la figure 2, l'utilisation des longerons pour assurer le renvoi de l'air traité vers la zone avant (1a) de l'habitacle (1) n'est pas indispensable, car la coordination des flux d'air thermiques assure une rotation en forme de tourbillon, permettant d'atteindre les pieds avant sans conduit de longueur excessive.

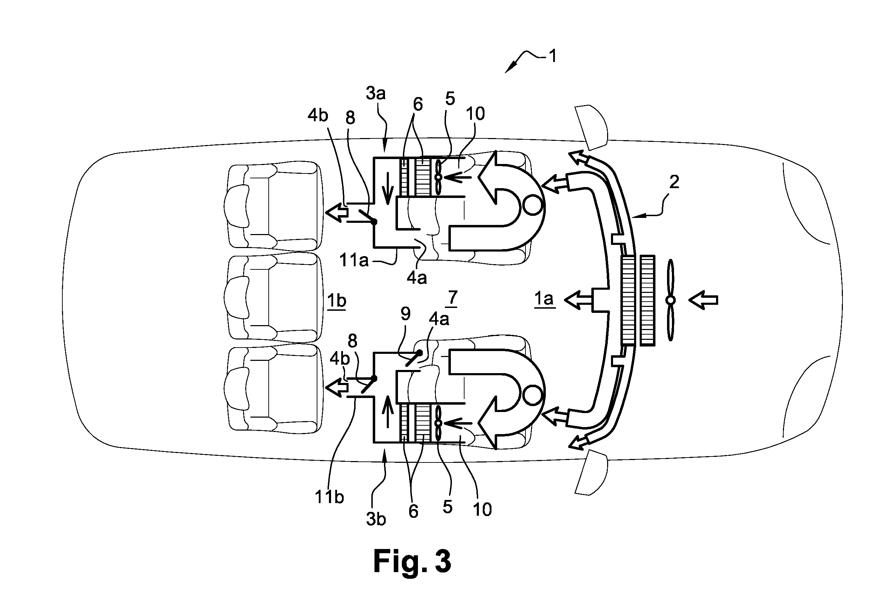

Sur la figure 3, un autre mode de réalisation de l'invention comporte deux modules (3a ou 3b) présentant une conformation en « J ».

Dans cet exemple, la grande jambe de la conformation en « J » est disposée latéralement extérieurement au niveau de la partie centrale de l'habitacle.

L'air (10) admis par la zone frontale (2) est forcé par les pulseurs (5) à travers les radiateurs (6) dans un conduit d'air traité pour être réparti entre l'avant et l'arrière du véhicule à l'aide de volets (8). La répartition de l'air traité par les modules (3a, 3b) de traitement aéraulique s'effectue de préférence au moyen de volets arrière (8) et/ou avant (9).

Les volets (8) sont situés uniquement à l'arrière pour les modules de traitement (3a) aéraulique de conducteur.

Les volets arrière (8) et les volets avant (9) sont au contraire disposés dans chaque conduit de direction de l'air traité vers l'avant ou l'arrière de l'habitacle pour les modules de traitement (3b) aéraulique de passager.

Dans les deux cas, le traitement aéraulique de chaque zone de pied est indépendant, de sorte que chaque passager - qu'il soit ou non conducteur - peut régler de manière indépendante le traitement aéraulique qu'il désire.

La libération de l'espace central (7) permet de disposer des organes ou accessoires en partie centrale de l'habitacle.

Chaque module (3a ou 3b) de traitement aéraulique comprend un boîtier B présentant une conformation en « J ».

Chaque boîtier B présentant une conformation en « J » est muni d'une bouche d'admission d'air 10 en communication avec l'intérieur de l'habitacle 1 de véhicule 2.

La bouche d'admission d'air 10 peut être munie d'un filtre à particules et d'un filtre à gaz polluants pour empêcher l'admission d'impuretés à l'intérieur du boîtier B.

Le boîtier B loge le pulseur 5 pour faire circuler à l'intérieur du boîtier B un flux d'air depuis la bouche d'admission d'air 10 vers une première conduite d'évacuation d'air 11a et vers une deuxième conduite d'évacuation d'air 11b.

La première conduite d'évacuation d'air 11a fait partie du boîtier B pour orienter un flux d'air vers la zone avant 1a de l'habitacle 1.

La deuxième conduite d'évacuation d'air 11b est reliée à une paroi du boîtier B pour orienter un flux d'air vers la zone arrière 1b de l'habitacle 1.

Le boîtier B loge également un moyen de traitement thermique 6 des flux d'air.

Un moyen de traitement 6 thermique peut comporter une pluralité de résistances chauffantes, du type PTC notamment, pour réchauffer les flux d'air.

Un autre moyen de traitement 6 thermique peut comporter une pluralité de cellules thermoélectriques, du type Peltier notamment, pour réchauffer les flux d'air.

Un autre moyen de traitement 6 thermique peut comporter un échangeur thermique entre d'une part un fluide caloporteur, eau ou glycol notamment, circulant à l'intérieur d'un circuit ménagé à l'intérieur de l'habitacle, et d'autre part le flux d'air entrant.

Un premier flux d'air est prévu pour modifier les paramètres aérothermiques de la zone avant 1a et un deuxième flux d'air est prévu pour modifier les paramètres aérothermiques de la zone arrière 1b.

La première conduite d'évacuation d'air 11a peut être obturée en aval par un organe déflecteur 9 du premier flux d'air. L'organe déflecteur 9 est manoeuvrable entre des positions d'admission réglables dans laquelle ledit organe 9 admet le premier flux d'air vers la zone avant 1a de l'habitacle 1, et une position de fermeture dans laquelle ledit organe 9 empêche l'admission du premier flux d'air vers la zone avant 1a de l'habitacle 1.

La deuxième conduite d'évacuation d'air 11b est disposée en aval de l'organe déflecteur 8 du deuxième flux d'air. L'organe déflecteur 8 est manoeuvrable entre des positions d'admission réglables dans laquelle ledit organe 8 admet le deuxième flux d'air vers la zone arrière 1b de l'habitacle 1, et une position de fermeture dans laquelle ledit organe 8 empêche l'admission du deuxième flux d'air vers la zone arrière 1b de l'habitacle 1.

Le boîtier B peut être équipé de moyens latéraux de fixation au bas des montants de portière ou de moyens latéraux de fixation au plancher de l'habitacle 1.

Dans cet exemple, l'entrée d'air (10) de chaque module (3a, 3b) est orientée sensiblement selon l'axe longitudinal de l'habitacle, de manière à assurer un forçage de l'air de la partie avant (1a) de l'habitacle (1) sans perte de charge notable à l'entrée du pulseur (5).

Dans le mode de réalisation de la figure 3, l'utilisation des longerons pour assurer le renvoi de l'air traité vers la zone avant (1a) de l'habitacle (1) n'est pas indispensable, car la coordination des flux d'air thermiques assure une rotation en forme de tourbillon, permettant d'atteindre les pieds avant sans conduit de longueur excessive.

Ce mode de réalisation permet ainsi de supprimer les conduits d'air en direction des pieds avant, de sorte que les longerons de l'habitacle restent libres de toute utilisation.

La partie centrale (7) dégagée par l'implantation latérale des modules (3a ou 3b) de traitement aéraulique permet l'implantation d'organes ou d'accessoires, notamment de batteries dans le cas d'un habitacle destiné à un véhicule électrique.

L'invention décrite en référence à trois modes de réalisation particuliers ne leur est nullement limitée, mais couvre au contraire toute modification de forme et toute variante de réalisation dans le cadre et l'esprit des revendications annexées.

## Revendications

1. Installation de chauffage, ventilation et/ou climatisation pour alimenter en air à température réglée
• au moins une zone avant (1a) et
• au moins une zone arrière (1b)
de l'habitacle d'un véhicule,
**caractérisée par le fait que**
• l'installation comprend deux modules (3a, 3b) distincts de traitement aéraulique disposés entre
o la zone avant (1a) et
o la zone arrière (1b).

2. Installation selon la revendication 1, **caractérisée en ce que** les modules (3a, 3b) sont disposés latéralement dans l'habitacle.

3. Installation selon la revendication 1 ou 2, **caractérisée par le fait que** chaque module (3a ou 3b) de traitement aéraulique comporte une sortie d'air avant (4a) en direction des pieds avant et une sortie d'air arrière (4b) en direction des pieds arrière.

4. Installation selon l'une quelconque des revendications 1 à 3, **caractérisée par le fait que** chaque module (3a ou 3b) de traitement aéraulique comporte un pulseur (5), un moyen de traitement thermique (6) et au moins un moyen de répartition aéraulique (8, 9) entre la zone arrière (1b) et la zone avant (1a) de l'habitacle (1).

5. Installation selon l'une quelconque des revendications 1 à 4, **caractérisée par le fait que** chaque module (3a, 3b) de traitement aéraulique est disposé au bas d'un montant de portière.

6. Installation selon la revendication 5, **caractérisée par le fait que** chaque module (3a, 3b) de traitement aéraulique présente une entrée d'air (10) orientée transversalement à l'axe longitudinal de l'habitacle.

7. Installation selon la revendication 5, **caractérisée par le fait que** chaque module (3a, 3b) de traitement aéraulique présente un pulseur (5) d'axe sensiblement transversal à la direction longitudinale de l'habitacle (1).

8. Installation selon la revendication 5, **caractérisée par le fait que** chaque module (3a, 3b) de traitement aéraulique présente un moyen de traitement thermique (6) orienté transversalement à la direction longitudinale de l'habitacle (1).

9. Installation selon l'une quelconque des revendications 1 à 4, **caractérisée par le fait que** chaque module (3a, 3b) comporte un pulseur (5) et un moyen de traitement thermique (6) orienté sensiblement selon l'axe longitudinal de l'habitacle (1).

10. Installation selon la revendication 9, **caractérisée par le fait que** chaque module (3a, 3b) de traitement aéraulique présente une entrée d'air (10) orientée sensiblement selon l'axe longitudinal de l'habitacle (1).
